# EUROPÄISCHE PATENTSCHRIFT

(11) **EP 1 310 395 B1**
(45) Veröffentlichungstag und Bekanntmachung des Hinweises auf die Patenterteilung: **14.12.2005**
(21) Anmeldenummer: 02024524.7
(22) Anmeldetag: 31.10.2002
(51) Int. Cl.: B60J 7/04, B60J 7/047, B60J 7/00

(54) **Schiebesystem zum Verschliessen und Freigeben einer Dachöffnung**
Slide system for closing and opening a roof opening
Système de coulissement pour fermer et ouvrir une ouverture de toit

(30) Priorität: 08.11.2001 DE 10154777
(43) Veröffentlichungstag der Anmeldung: 14.05.2003
(73) Patentinhaber: ArvinMeritor GmbH, 63128 Dietzenbach (DE)
(72) Erfinder: Messerschmidt, Martin, 55128 Mainz (DE)
(74) Vertreter: Sties, Jochen

(56) Entgegenhaltungen:
- DE-A- 3 810 888
- DE-U- 9 315 575
- PATENT ABSTRACTS OF JAPAN vol. 012, no. 171 (M-700), 21. Mai 1988 (1988-05-21) -& JP 62 286828 A (OI SEISAKUSHO CO LTD), 12. Dezember 1987 (1987-12-12)

## Beschreibung

Die Erfindung betrifft ein Schiebesystem zum Verschließen und Freigeben einer Dachöffnung, mit einer Schiebeführung, die an einem Fahrzeugdach angebracht werden kann, und mindestens einer Schiebelamelle, die in der Schiebeführung verschiebbar ist.

Ein solches Schiebesystem ist aus der deutschen Patentschrift 195 11 066 bekannt. Die Schiebelamellen sind unterhalb eines transparenten Dachelementes angeordnet, um nach Art eines Sonnenschutzes zu wirken. Jede Schiebelamelle ist mit der benachbarten Schiebelamelle durch eine Stoffbahn verbunden, die Zugkräfte von einer Schiebelamelle zur benachbarten übertragen kann. Die Verwendung einer Stoffbahn zur Verbindung der Schiebelamellen ist jedoch hinsichtlich der Positionsgenauigkeit und der Festigkeit langfristig nicht zufriedenstellend. Ein weiteres herkömmliches Schiebesystem ist in der Gebrauchsinusterveröffentlichung DE 93 15 575 U gezeigt.

Die Aufgabe der Erfindung besteht somit darin, ein Schiebesystem der eingangs genannten Art dahingehend weiterzubilden, daß eine verbesserte Festigkeit und Positionsgenauigkeit erhalten wird.

Zu diesem Zweck ist erfindungsgemäß vorgesehen, daß an der Schiebelamelle zwei Verbindungsglieder angebracht sind, von denen eines an einer vorlaufenden Lamelle und das andere an einer nachlaufenden Lamelle angreift, wobei mindestens eines der Verbindungsglieder verschiebbar an der Schiebelamelle angebracht ist. Die Verbindungsglieder, die als kurze Hebel beispielsweise aus Metall oder Kunststoff ausgeführt sein können, ermöglichen eine präzise Führung und Verbindung der Schiebelamellen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen, perspektivischen Ansicht ein Fahrzeugdach mit erfindungsgemäßem Schiebesystem und zurückgeschobenem Deckelteil;
- Figur 2 einen schematischen Schnitt entlang der Ebene II-II von Figur 1;
- Figur 3 einen Schnitt entlang der Ebene III-III von Figur 1;
- Figur 4 einen schematischen Schnitt entlang der Ebene IV-IV von Figur 2;
- Figur 5 einen schematischen Schnitt entlang der Ebene V-V von Figur 1;
- Figur 6 in einer vergrößerten Ansicht eine Schiebelamelle; und
- Figur 7 einen Schnitt entlang der Ebene VII-VII von Figur 6.

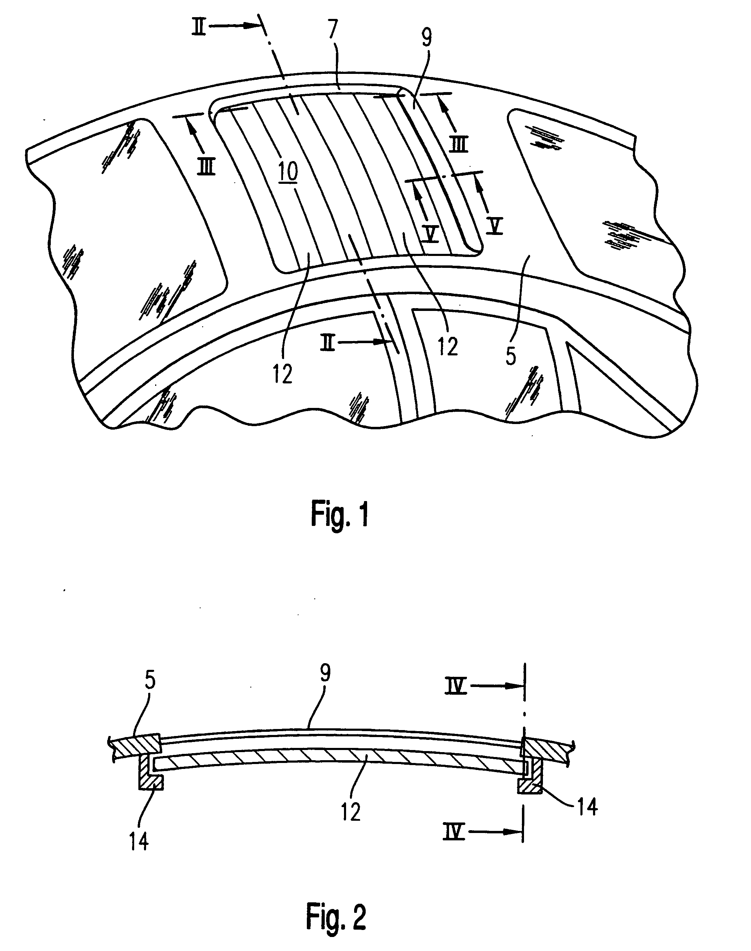

In Figur 1 ist schematisch ein Fahrzeugdach 5 gezeigt, das mit einer Dachöffnung 7 versehen ist. Die Dachöffnung 7 kann in bekannter Weise von einem Dekkelteil 9 verschlossen werden, das in Figur 1 in seiner geöffneten, bezüglich des Fahrzeugs nach hinten verschobenen Stellung gezeigt ist. Das Deckelteil kann aus einem transparenten Material bestehen, so daß es lichtdurchlässig ist.

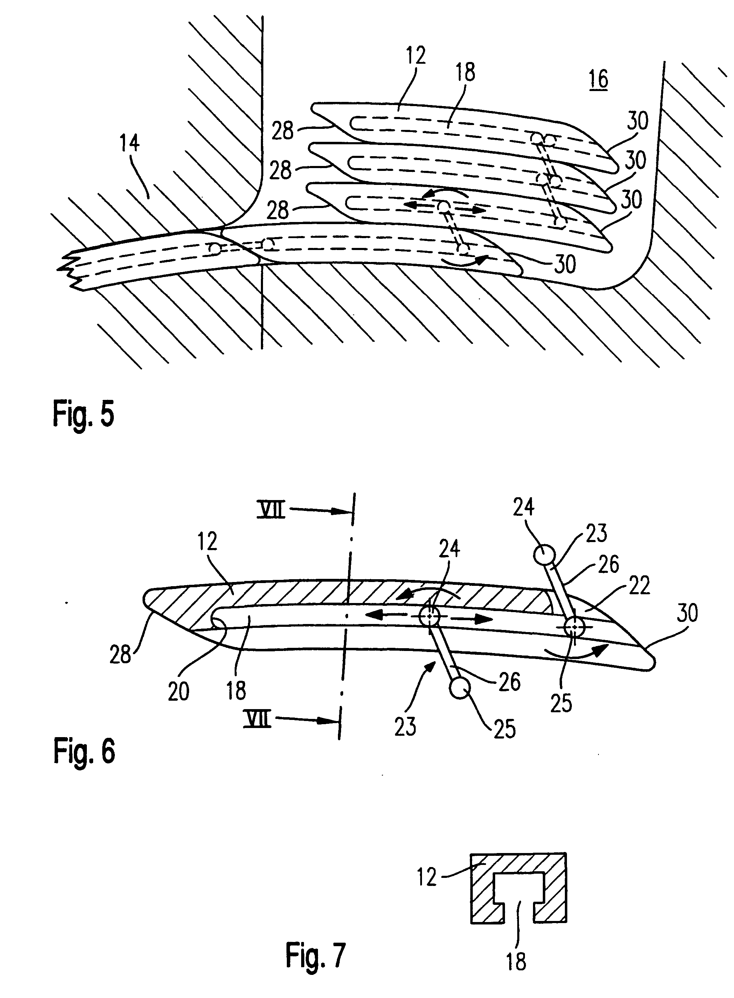

Unterhalb des Deckelteils 9 ist ein Schiebesystem 10 angeordnet, das als Sonnenschutz dient und aus mehreren Schiebelamellen 12 besteht. Die Schiebelamellen erstrecken sich parallel zueinander quer zur Längsrichtung des Fahrzeugs und liegen aneinander an. Im Bereich der Seitenränder der Dachöffnung 7 sind die Schiebelamellen 12 in einer Schiebeführung 14 (siehe die Figuren 2 bis 4) verschiebbar aufgenommen. Die Schiebeführung erstreckt sich entlang den gesamten Seitenrändern der Dachöffnung 7 bis hin zu einem Aufnahmeraum 16 (siehe Figur 5), der im Bereich des hinteren Randes der Dachöffnung 7 angeordnet ist.

Jede Schiebelamelle 12 weist in ihrem seitlich außenliegenden Bereich, der in der Schiebeführung 14 aufgenommen ist, jeweils eine Gleitführung 18 auf (siehe insbesondere die Figuren 6 und 7), die als Schlitz mit T-förmigem Querschnitt ausgebildet ist. Der dem Querbalken des T-Profils entsprechende Bereich der Gleitführung 18 endet am vorderen Rand jeder Schiebelamelle 12 in einer Anlagefläche 20, während er an einem Hinterrand 30 offen ausgeführt ist. Der dem vertikalen Abschnitt des T-Profils entsprechende Teil der Schiebeführung ist nach unten hin über die ganze Länge offen ausgeführt. Am hinteren Rand der Schiebelamelle 12 ist ein Ausbruch 22 ausgebildet, so daß die Gleitführung 18 nach oben geöffnet ist.

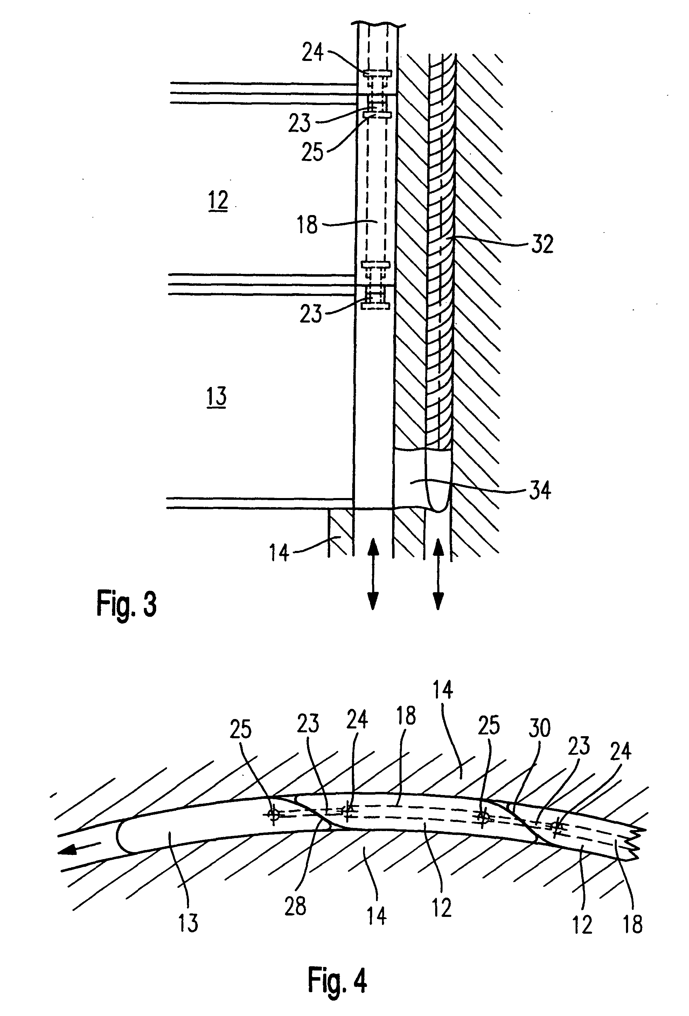

In jeder Gleitführung sind zwei Verbindungsglieder 23 angeordnet, die jeweils einen Gleitkopf 24, einen Schwenkkopf 25 und einen dazwischenliegenden Verbindungsabschnitt 26 aufweisen. Die Gleitköpfe 24 und die Schwenkköpfe 25 der Verbindungsglieder 23 sind stiftförmig ausgeführt, so daß sie in den Querabschnitt des T-Profils eingreifen. Das vordere Verbindungsglied 23 jeder Schiebelamelle 12 ist mit seinem Gleitkopf 24 in der Gleitführung 18 aufgenommen, so daß der Verbindungsabschnitt 26 mit dem daran befestigten Schwenkkopf 25 nach unten aus der entsprechenden Schiebelamelle 12 heraussteht. Das zweite, hintere Verbindungsglied 23 ist mit seinem Schwenkkopf 25 schwenkbar, jedoch ortsfest in der Gleitführung 18 im Bereich des Ausschnittes 22 aufgenommen. Der Schwenkkopf 25 des ersten Verbindungsgliedes 23 ist wiederum am hinteren Abschnitt der vorhergehenden Schiebelamelle 12 ortsfest angebracht, während der Gleitkopf 24 des hinteren Verbindungsgliedes 23 verschiebbar in der Gleitführung 18 der nachlaufenden Schiebelamelle 12 angebracht ist (siehe Figur 4). Obwohl also an jeder Schiebelamelle zwei Verbindungsglieder angebracht sind, ist in der Summe für jede Schiebelamelle nur ein einziges Verbindungsglied vorhanden.

Die Schiebelamellen 12 sind sowohl in Längsrichtung als auch in Querrichtung gekrümmt ausgeführt, so daß sie an den Verlauf des Fahrzeugdaches 5 angepaßt sind. Insbesondere die Krümmung in Querrichtung ist wichtig, um die lichte Höhe unterhalb des Schiebesystems nicht unnötig einzuschränken. Dies stellt einen wesentlichen Vorteil gegenüber konventionellen Sonnenrollos aus Stoff dar, die sich notwendigerweise geradlinig zwischen ihren beiden Seitenrändern erstrecken und daher nicht an den gewölbten Verlauf eines üblichen Fahrzeugdaches angepaßt werden können.

Der Vorderrand 28 jeder Schiebelamelle ist ebenso wie jeder Hinterrand 30 schräg relativ zur Verschieberichtung in der Schiebeführung 14 ausgerichtet, und zwar unter einem Winkel von etwa 45°. Die benachbarten Schiebelamellen 12 können somit unmittelbar aneinander anliegen, wobei selbst ein geringer Spalt sich nicht unangenehm bemerkbar macht, da das von oben einfallende Licht dennoch zuverlässig abgehalten wird.

Nachfolgend wird die Funktionsweise des Schiebesystems ausgehend von dem in Figur 1 gezeigten Zustand beschrieben, in welchem die Schiebelamellen die Dachöffnung 7 des Fahrzeugdachs 5 verschließen. In diesen Zustand wurden die Schiebelamellen von einem (nicht dargestellten) Antriebsmotor gebracht, der auf ein Bedienkabel 32 einwirkt. Das Bedienkabel 32 ist in einem seitlichen Kanal der Schiebeführung 14 aufgenommen und durch einen Mitnehmer 34 mit der vordersten Lamelle 13 verbunden. Die vorderste Lamelle 13 unterscheidet sich von den übrigen Lamellen lediglich dadurch, daß ihr Vorderrand gleichmäßig gerundet ausgeführt ist und sich die Gleitführung 18 nicht entlang ihrem gesamten Seitenränd erstreckt, sondern nur eine Lagerung für den Schwenkkopf 25 des an ihr angreifenden Verbindungsgliedes 23 ausgebildet ist.

Ausgehend von dem in Figur 1 gezeigten Zustand können die Schiebelamellen 12 bezüglich des Fahrzeugs nach hinten verfahren werden, so daß sie der Reihe nach in den Aufnahmeraum 16 gelangen. Dabei drückt der schräg angestellte Hinterrand 30 jeder Schiebelamelle gegen den ebenso schräg angestellten Vorderrand 28 der benachbarten Schiebelamelle. Solange sich die Schiebelamellen in der Schiebeführung 14 befinden, können die einzelnen Schiebelamellen 12 nicht nach oben ausweichen, so daß sie von der vordersten Lamelle 13 der Reihe nach zum Aufnahmeraum 16 geschoben werden. Sobald jedoch eine Schiebelamelle 12 vollständig in den Aufnahmeraum 16 eingetreten ist, wird sie beginnend mit ihrem Vorderrand nach oben gedrückt, da sich der schräg angestellte Hinterrand der vorhergehenden, noch in der Schiebeführung 14 befindenden Schiebelamelle unter den schräg angestellten Vorderrand 28 schiebt. Dabei wird das sich an dieser Stelle befindende Verbindungsglied 23 entgegen dem Uhrzeigersinn um den Schwenkkopf 25 der Schiebelamelle verschwenkt, die sich noch in der Schiebeführung 14 befindet, bis der Verbindungsabschnitt 26 am Rand des Ausbruchs 22 anliegt. In dieser Stellung wird der Gleitkopf 24 in der Gleitführung 18 der sich bereits im Aufnahmeraum befindenden Schiebelamelle nach hinten geschoben, bis er am Schwenkkopf 25 des hinteren Verbindungsgliedes 23 der Schiebelamelle angelangt, die bereits vor ihr in den Aufnahmeraum eingetreten ist und sich oberhalb von ihr befindet. Auf diese Weise werden die Schiebelamellen 12 Stück für Stück in den Aufnahmeraum 16 eingeschoben und dort übereinander gestapelt.

Beim Schließen des Schiebesystems erfolgt dieser Vorgang in der umgekehrten Reihenfolge. Die unterste Schiebelamelle des im Aufnahmeraum 16 befindlichen Stapels wird nach vorne in die Schiebeführung 14 hineingezogen, wobei das hintenliegende Verbindungsglied 23 in der Gleitführung 18 der darüberliegenden Schiebelamelle 12 nach vorne gezogen wird. Sobald der Hinterrand 30 der untersten Lamelle im Bereich des Vorderrandes 28 der darüberliegenden Lamelle liegt, rutscht der Vorderrand nach unten auf den Hinterrand der sich dann bereits fast vollständig in der Schiebeführung 14 befindenden Schiebelamelle, und das Verbindungsglied 23 klappt in eine waagrechte Position um. In dieser Position liegt der Gleitkopf 24 an der Anlagefläche 20 der Gleitführung 18 an, so daß diese Schiebelamelle nach vorne mitgenommen wird.

### Bezugszeichenliste:

- 5:: Fahrzeugdach
- 7:: Dachöffnung
- 9:: Deckelteil
- 10:: Schiebesystem
- 12:: Schiebelamelle
- 13:: vorderste Lamelle
- 14:: Schiebeführung
- 16:: Aufnahmeraum
- 18:: Gleitführung
- 20:: Anlagefläche
- 22:: Ausbruch
- 23:: Verbindungsglied
- 24:: Gleitkopf
- 25:: Schwenkkopf
- 26:: Verbindungsabschnitt
- 28:: Vorderrand
- 30:: Hinterrand
- 32:: Bedienkabel
- 34:: Mitnehmer

## Patentansprüche

1. Schiebesystem (10) zum Verschließen und Freigeben einer Dachöffnung, mit einer Schiebeführung (14), die an einem Fahrzeugdach angebracht werden kann, und mindestens einer Schiebelamelle (12), die in der Schiebeführung verschiebbar ist, **dadurch gekennzeichnet, daß** an der Schiebelamelle (12) zwei Verbindungsglieder (23) angebracht sind, von denen eines an einer vorlaufenden Lamelle und das andere an einer nachlaufenden Lamelle angreift, wobei mindestens eines der Verbindungsglieder (23) verschiebbar an der Schiebelamelle (12) angebracht ist.

2. Schiebesystem nach Anspruch 1, **dadurch gekennzeichnet, daß** die Verbindungsglieder (23) als kurze Hebel ausgeführt sind, deren Länge deutlich geringer ist als die parallel zur Verschieberichtung gemessene Länge der Schiebelamelle (12).

3. Schiebesystem nach einem der Ansprüche 1 und 2, **dadurch gekennzeichnet, daß** die Schiebelamelle (12) mit einer Gleitführung (18) versehen ist, in der mindestens eines der Verbindungsglieder (23) verschiebbar angeordnet ist.

4. Schiebesystem nach Anspruch 3, **dadurch gekennzeichnet, daß** die Gleitführung (18) ein Schlitz mit T-förmigem Querschnitt ist, der auf der Unterseite der Schiebelamelle mündet.

5. Schiebesystem nach Anspruch 4, **dadurch gekennzeichnet, daß** der Schlitz (18) im Bereich der Schiebeführung mündet.

6. Schiebesystem nach einem der vorhergehenden Ansprüche, **dadurch gekennzeichnet, daß** eines der Verbindungsglieder (23) schwenkbar an der Schiebelamelle (12) angebracht ist, wobei die Schwenkachse festgelegt ist.

7. Schiebesystem nach einem der vorhergehenden Ansprüche, **dadurch gekennzeichnet, daß** die Schiebelamelle (12) einen Vorderrand (28) und einen Hinterrand (30) aufweist, die beide etwa parallel zueinander und schräg zur Verschieberichtung ausgerichtet sind.

8. Schiebesystem nach Anspruch 7, **dadurch gekennzeichnet, daß** der Vorderrand (28) und der Hinterrand (30) in einem Winkel von etwa 45° zur Verschieberichtung ausgerichtet sind.

9. Schiebesystem nach einem der Ansprüche 7 und 8, **dadurch gekennzeichnet, daß** sich an die Schiebeführung (14) ein Aufnahmeraum (16) anschließt, in welchem die Schiebelamellen (12) übereinanderliegend aufgenommen werden können.

10. Schiebesystem nach einem der vorhergehenden Ansprüche, **dadurch gekennzeichnet, daß** die Schiebelamelle (12) in Querrichtung gewölbt ist.

11. Schiebesystem nach einem der vorhergehenden Ansprüche, **dadurch gekennzeichnet, daß** die Schiebelamelle (12) in Längsrichtung gewölbt ist.

## Claims

1. A sliding system (10) for closing and exposing a roof opening, comprising a sliding guide (14) which can be mounted to a vehicle roof, and at least one sliding plate (12) adapted to be shifted in the sliding guide, **characterized in that** two connecting links (23) are mounted to the sliding plate (12), one of the connecting links engaging a leading plate and the other engaging a trailing plate, at least one of the connecting links (23) being shiftably mounted to the sliding plate (12).

2. The sliding system according to claim 1, **characterized in that** the connecting links (23) are embodied as short levers that have a length which is significantly smaller than the length of the sliding plate (12) as measured parallel to the shifting direction.

3. The sliding system according to any of the claims 1 and 2, **characterized in that** the sliding plate (12) is provided with a gliding guide (18), at least one of the connecting links (23) being provided so as to be shiftable in the gliding guide.

4. The sliding system according to claim 3, **characterized in that** the gliding guide (18) is a slot with a T-shaped cross-section which opens out on the underside of the sliding plate.

5. The sliding system according to claim 4, **characterized in that** the slot (18) opens out in the region of the sliding guide.

6. The sliding system according to any of the preceding claims, **characterized in that** one of the connecting links (23) is pivotally mounted to the sliding plate (12), with the swiveling axis being fixed.

7. The sliding system according to any of the preceding claims, **characterized in that** the sliding plate (12) has a front edge (28) and a rear edge (30) which both lie approximately parallel to each other and obliquely to the shifting direction.

8. The sliding system according to claim 7, **characterized in that** the front edge (28) and the rear edge (30) are aligned at an angle of approximately 45° to the shifting direction.

9. The sliding system according to any of the claims 7 and 8, **characterized in that** the sliding guide (14) is adjoined by an accommodation space (16) in which the sliding plates (12) may be received so as to lie one on top of the other.

10. The sliding system according to any of the preceding claims, **characterized in that** the sliding plate (12) is arched in the transverse direction.

11. The sliding system according to any of the preceding claims, **characterized in that** the sliding plate (12) is arched in the longitudinal direction.

## Revendications

1. Système coulissant (10) pour fermer et pour libérer une ouverture de toit, comprenant un guidage (14) à coulisse, qui peut être appliqué sur un toit ou pavillon de véhicule, et au moins une lamelle coulissante (12), qui est susceptible de coulisser dans le guidage à coulisse, **caractérisé en ce que** sont montés sur la lamelle coulissante (12) deux organes de liaison (23), dont l'un agit sur une lamelle dans le sens avance et l'autre agit sur une lamelle dans le sens recul, au moins l'un des organes de liaison (23) étant monté coulissant sur la lamelle coulissante (12).

2. Système coulissant selon la revendication 1, **caractérisé en ce que** les organes de liaison (23) sont réalisés sous la forme de leviers courts, dont la longueur est nettement plus faible que la longueur de la lamelle coulissante (12) mesurée parallèlement à la direction de coulissement.

3. Système coulissant selon l'une des revendications 1 et 2, **caractérisé en ce que** la lamelle coulissante (12) est munie d'un guidage à coulisse (18), dans lequel est disposé coulissant au moins l'un des organes de liaison (23).

4. Système coulissant selon la revendication 3, **caractérisé en ce que** le guidage à coulisse (18) est une fente à section transversale en forme de T et qui débouche sur la face inférieure de la lamelle coulissante.

5. Système coulissant selon la revendication 4, **caractérisé en ce que** la fente (18) débouche dans la zone du guidage coulissant.

6. Système coulissant selon l'une des revendications précédentes, **caractérisé en ce que** l'un des organes de liaison (23) est monté pivotant sur la lamelle coulissante (12), l'axe de pivotement étant fixé.

7. Système coulissant selon l'une des revendications précédentes, **caractérisé en ce que** la lamelle coulissante (12) comporte un bord avant (28) et un bord arrière (30), ces deux bords étant orientés sensiblement parallèles l'un à l'autre et inclinés par rapport à la direction de déplacement.

8. Système coulissant selon la revendication 7, **caractérisé en ce que** le bord avant (28) et le bord arrière (30) sont orientés en faisant un angle d'environ 45° par rapport à la direction de coulissement.

9. Système coulissant selon l'une des revendications 7 et 8, **caractérisé en ce que** se raccordent au guidage coulissant (14) un espace de réception (16), dans lequel peuvent être reçues les lamelles coulissantes (12) disposées les unes au-dessus des autres.

10. Système coulissant selon l'une des revendications précédentes, **caractérisé en ce que** la lamelle coulissante (12) est bombée dans la direction transversale.

11. Système coulissant selon l'une des revendications précédentes, **caractérisé en ce que** la lamelle coulissante (12) est bombée dans la direction longitudinale.
